(19) Europäisches Patentamt
European Patent Office
Office européen des brevets

(11) **EP 1 755 231 B1**

(12) **EUROPEAN PATENT SPECIFICATION**

(45) Date of publication and mention
of the grant of the patent:
**19.06.2013 Bulletin 2013/25**

(51) Int Cl.:
*H04B 1/69* (2011.01)     *H04L 25/02* (2006.01)
*H04L 1/06* (2006.01)     *H04B 7/04* (2006.01)
*H04B 7/08* (2006.01)     *H04B 1/7163* (2011.01)

(21) Application number: **05017961.3**

(22) Date of filing: **18.08.2005**

(54) **Multiple input - multiple output wireless communication system**

Drahtloses Kommunikationssystem mit mehreren Eingängen und mehreren Ausgängen

Système de communication sans fil à entrées multiples et sorties multiples

(84) Designated Contracting States:
**AT BE BG CH CY CZ DE DK EE ES FI FR GB GR
HU IE IS IT LI LT LU LV MC NL PL PT RO SE SI
SK TR**

(43) Date of publication of application:
**21.02.2007 Bulletin 2007/08**

(73) Proprietor: **MOSAID Technologies Incorporated
Ottawa, ON K2K 2X1 (CA)**

(72) Inventors:
 • **Zhang, Honggang, Dr.**
  **38100 Trento (IT)**
 • **Zhou, Xiaofei**
  **38050 Povo-Trento (IT)**

(74) Representative: **Gervasi, Gemma et al
Notarbartolo & Gervasi GmbH
Bavariaring 21
80336 München (DE)**

(56) References cited:
**WO-A-2005/034419     US-A1- 2004 081 073
US-A1- 2004 202 256**

 • **FARSEROTU J ET AL: "UWB TRANSMISSION
AND MIMO ANTENNA SYSTEMS FOR NOMADIC
USERS AND MOBILE PANS" WIRELESS
PERSONAL COMMUNICATIONS, SPRINGER,
DORDRECHT, NL, vol. 22, no. 2, August 2002
(2002-08), pages 297-317, XP001122746 ISSN:
0929-6212**
 • **YUNHO JUNG ET AL: "Symbol detection
algorithm and implementation results for space-
frequency OFDM transmit diversity scheme"
ADVANCED SYSTEM INTEGRATED CIRCUITS
2004. PROCEEDINGS OF 2004 IEEE ASIA-
PACIFIC CONFERENCE ON FUKUOKA, JAPAN
4-5 AUG. 2004, PISCATAWAY, NJ, USA,IEEE, US,
4 August 2004 (2004-08-04), pages 322-325,
XP010733946 ISBN: 0-7803-8637-X**
 • **ALAMOUTI S M: "A simple transmit diversity
technique for wireless communications" IEEE
JOURNAL ON SELECTED AREAS IN
COMMUNICATIONS, IEEE SERVICE CENTER,
PISCATAWAY, NJ, US, vol. 16, no. 8, October 1998
(1998-10), pages 1451-1458, XP002100058 ISSN:
0733-8716**

Remarks:
The file contains technical information submitted after
the application was filed and not included in this
specification

**Description**

This invention relates to a receiver for receiving data in a multiple input-multiple output (MIMO) ultrawideband (UWB) wireless communication system and to a transmitter for transmitting data in this communication system. Furthermore, the invention relates to a method for transmitting data in this system and to a method for receiving data in this system. Such a system offers improved wireless link quality and capacity gains, which can be exploited by using multiple antennas at both ends of a link. An efficient way of exploiting MIMO wireless channels is the use of transmit diversity techniques by means of a space-time block coding (STBC) where the key idea is to equally obtain space diversity and coding gains at the receiver with just simple linear detection processing in both flat fading as well as multi-path frequency selective fading environment. To this end reference is made to the following publications:

S.M. Alamouti "A simple transmitter diversity scheme for wireless communications", IEEE J.Select.Areas Commun., vol.16, n08, pp.1451-1458, Oct. 1998.

V.Tarokh et al. "Space-time block coding for wireless communications: performance results", IEEE J.Select.Areas Commun., vol. 17, n03, pp. 451-460, march 1999.

E.1Lindskog et al, "A transmit diversity scheme for channels with intersymbol interference" Proc. IEEE, Int. Conf. Communications 2000, New Orleans, pp.307-311, June 2000.

In the frame of ultra-wideband (UWB) wireless communications there are a number of frequency subsets available among the whole UWB frequency bandwidth (3,1 to 10,6 GHz). Therefore, cooperative utilization of the multiple UWB frequency sub-bands in a manner of frequency diversity MIMO transmissions is a natural and spectrum-efficient technical approach in power-limited as well as interference-limited operation environment for UWB wireless communication systems, which-further suggests the usage of MIMO architecture and Space Frequency block coding (SFBC). In this context, reference is made to:

L. Yang et al., "Analog space-time coding for multi-antenna ultra-wideband transmissions" in IEEE Trans.Comm., vol. 52, n03, pp.507-517, March 2004.

W.P.Siriwongpairat et al. "Performance analysis of time hopping and direct sequence UWB spare-timing systems" in IEEE GLOBECOM 2004, vol.:6, pp 3526-3530, Dec. 2004.

Furthermore, the US Patent Application US 2004/081073 A1 discloses a MIMO wireless communication system comprising an ultrawideband receiver with multiple transmit antennas and an ultrawideband receiver with multiple receive antennas incorporating a space-frequency block coding unit in the transmitter and in the receicer.

This state of the art does not consider the problem of frequency-dependent multipath fading channels corresponding to the different UWB frequency subbands, in which MIMO-UWB wireless communications suffer from severe multipath frequency selective fading, and the channels orthogonality required by SFBC might be lost on the receiver side. An effective receiving combining algorithm with MIMO orthogonality recovery is necessary for realizing full space diversity as well as coding gain.

The aim of the present invention is to achieve the full diversity and coding gains. This aim is achieved by the receiver as defined in claim 1, the transmitter as defined in claim 4, and the methods for transmitting and receiving data, respectively, according to claims 7 and 9. Details of preferred embodiments of the invention are defined in the subordinated claims. Shortly resumed the received MIMO signals are decoupled by means of a decoupling processing of the incoming MIMO signals received by combiner matrix circuits, in which frequency exchange processing is carried out to recover the lost orthogonality of MIMO wireless channels.

The invention will be described hereafter by means of the attached drawings.

Fig. 1 is a diagram showing the frequency diversity based on multiple sub-bands division in a UWB wireless system.
Fig. 2 shows a block representation of a UWB transmitter using space-frequency block coding (SFBC) for a MIMO wireless channel.
Fig. 3 shows a block representation of an UWB receiver for a SFBC-based MIMO wireless channel including a decoupling and combining circuit.
Fig. 4 shows the decoupling and combining structure with a frequency exchange processing in the receiver corresponding to a SFBC-based MIMO frequency-dependent wireless channel.

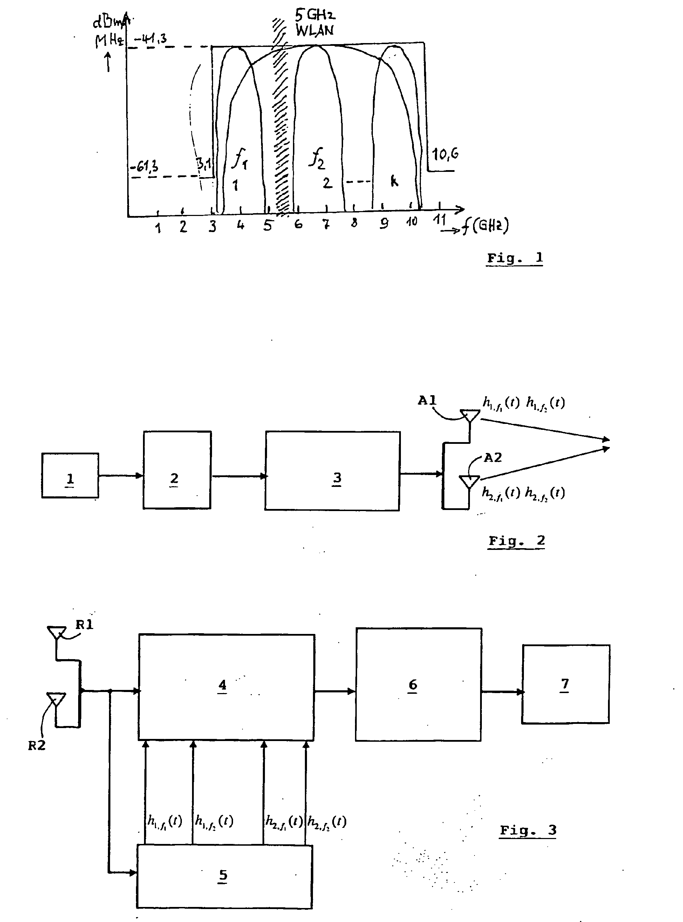

On the horizontal axis of the diagram shown in Fig. 1 the frequency in GHz is plotted whereas the vertical axis represents the UWB effective isotropically-radiated power level (in dBm/MHz). The WLAN channel is located between 5 and 6 MHz.

On the transmitter side (Fig.2) the SFBC-based MIMO transmission scheme can be described as follows: On the UWB frequency sub-band $f_1$ two signal sequences are sent from an input data unit 1 to an encoder 2 where they are encoded according to a space-frequency-block encoding (SFBC) and then modulated by a multi-band pulse generator 3 before being applied to a first transmit antenna A1 and a second transmit antenna A2 respectively. Then, on the UWB frequency sub-band $f_2$ the negative and the complex conjugate version of the second signal sequence is transmitted through the first transmit antenna A1 and the complex conjugate version of the first signal sequence is transmitted through the second transmit antenna A2. The MIMO wireless channel between the transmitter (fig.2) and the receiver (fig. 3) can be described by the following matrix:

$$
H = \begin{bmatrix} h_{1,f1}(t) & h_{2,f1}(t) \\ h_{2,f2}^{*}(t) & -h_{1,f2}^{*}(t) \end{bmatrix}
$$

$h_{1,f1}(t)$ and $h_{1,f2}(t)$ are the frequency-selective multipath channels from the transmit antenna A1 to the receiver on different UWB frequency sub-bands $f_1$ and $f_2$ respectively. Similarly $h_{2,f1}(t)$ and $h_{2,f2}(t)$ are the frequency-selective multipath channels from the transmit antenna A2 to the receiver on different UWB frequency sub-bands $f_1$ and $f_2$ respectively.

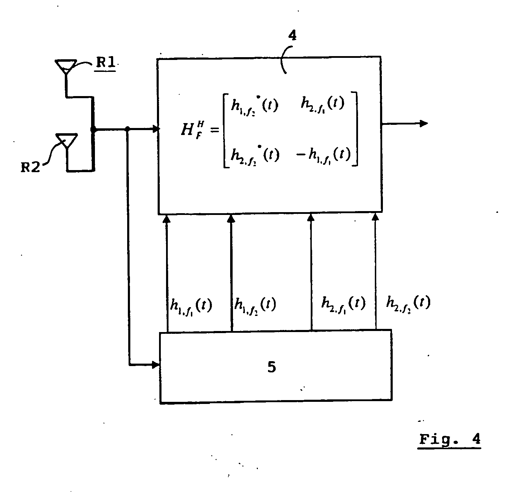

On the MIMO receiver side (fig. 3 and 4) an antenna array (e.g. two receiving antennas R1 and R2) receives these signals and applies them to a decoupling and combining processing circuit 4. They are also applied to a channel estimator 5 which makes channel state informations available to the decoupling and combining processing circuit 4. Thus this circuit is able to supply decoupled signals to a baseband processing unit 6 for detection and release to an output 6.

In fig.4 the matrix in the circuit 4 describes the decoupling and combining matrix according to the invention and corresponding to the SFBC-based MIMO wireless frequency-dependent channels.

At the MIMO decoupling and combining processing step, the received MIMO-UWB signal sequences are first fed into a SFBC-related decoupling matched filter 4, i.e. a decoupler and combiner circuit, to form the two decoupled outputs. Then, the two decoupled signal sequences are further used independently to estimate the originally transmitted first and second transmitted signal sequences. The necessary channel state information is available from a MIMO channel estimator unit 5. The following detection step can therefore be performed with a general base-band detection unit 6 (e.g. a minimum-mean-square-error or MMSE Rake detector). While in the conventional Space-Time Block Coding (STBC) the reason for the simplified linear receiving detection is the channel orthogonality recovery processing so that $H^H H$ is diagonal, according to the present invention H is the MIMO wireless channel and $H^H$ is the corresponding MIMO decoupling combiner matrix on the receiver side ($H^H$ means matrix transpose and complex conjugate operation).

Contrary to the state of the art as described above, the invention provides for a specific decoupling algorithm and combiner processing circuit 4 by employing a matrix $H^H_F$ with frequency exchange operation for recovering orthogonality corresponding to the SFBC-based MIMO wireless channel.

For the decoupling and combining processing unit the $H^H_F$ matrix operation is defined as a matrix transpose, complex conjugate and frequency exchanging operation. Specifically the following definitions are true corresponding to each element in the matrix $H^H_F$ :

$$
(h_{1,f1}(t))^{*} = h_{1,f2}^{*}(t), \ (f_1 \Rightarrow f_2);
$$

$$
(h_{2,f1}(t))^{*} = h_{2,f2}^{*}(t), \ (f_1 \Rightarrow f_2)
$$

$$
(h_{1,f2}(t))^{*} = h_{1,f1}^{*}(t), \ (f_2 \Rightarrow f_1);
$$

$$
(h_{2,f2}(t))^{*} = h_{2,f1}^{*}(t), \ (f_2 \Rightarrow f_1)
$$

where (*) represents the complex conjugate and frequency exchanging operation between different UWB frequency subbands such as $f_1$, and $f_2$. The specific $H^H_F$ matrix operation with frequency exchanging is only valid for the SFBC-based MIMO receiver decoupling procedure corresponding to the invention.

The receiver, the transmitter and the methods according to the present invention allow a cooperative utilization of the multiple UWB frequency subbands in a spectrum-efficient manner and the full space diversity and coding gains of MIMO architecture. Moreover SFBC can be achieved even in a frequency dependent, frequency-selective multi-path fading channel.

The receiver, the transmitter and the related methods can be applied to the cooperative multi-hop relaying among multiple distributed nodes in ad-hoc UWB networks as well as UWB sensor networks. It overcomes the problem of the lack of perfect synchronisation, on propagation delay and relaying timing among the intermediate relaying nodes while using a space-time block coding based cooperation scheme, and is capable of potentially providing full spatial and frequency diversity.

**Claims**

1. A receiver for receiving data in a Multiple Input - Multiple Output, MIMO, ultrawideband, UWB, wireless communication system having multiple different frequency subbands ($f_1$, $f_2$), the receiver comprising

    - two receive antennas (R1, R2), for receiving signals;
    - receiving means (4, 5) for applying a decoupling and combining processing to received signals to form two decoupled output signals supplied to a baseband processing detection unit (6);
    - said receiving means (4, 5) for applying a decoupling and combining processing to the received signals further comprising means (4, 5) for processing a matrix operation $H^H{}_F$ for a frequency exchange processing such that each element of the matrix is defined as follows:

$$(h_{1,f1}(t))^* = (h_{1,f2}{}^*(t)) \; ;$$

$$(h_{2,f1}(t))^* = (h_{2,f2}{}^*(t))$$

$$(h_{1,f2}(t))^* = (h_{1,f1} {}^*(t)) \; ;$$

$$(h_{2,f2}(t))^* = (h_{2,f1} {}^*(t))$$

    wherein * represents the complex conjugate and frequency exchange operation between the two said frequency subbands; wherein $h_{1,f1}$ and $h_{1,f2}$ model the frequency selective multipath channels from the first transmit antenna to the receiver on different said frequency subbands f1 and f2 and $h_{2,f1}$ and $h_{2,f2}$ model the frequency selective multipath channels from the second transmit antenna to the receiver on different said frequency subbands $f_1$ and $f_2$; and
    - means for using said decoupled signals independently to estimate an originally transmitted first and second signal sequences.

2. The receiver of claim 1 wherein the baseband processing detection unit (6) comprises a Rake detect or.

3. The receiver of any one of claims 1 or 2 wherein a bandwidth of the receiver includes frequencies from about 3.1 GHz to about 10.6 GHz.

4. A Multiple Input - Multiple Output, MIMO, ultrawideband, UWB, wireless communication system having multiple different frequency sub-bands ($f_1$, $f_2$), the system comprising a receiver according to any of the claims 1-3.

5. A method for receiving data in a Multiple Input - Multiple Output, MIMO, ultrawideband, UWB, wireless communication system having multiple different frequency subbands ($f_1$, $f_2$), comprising:

    - applying a decoupling and combining processing to received signals to form two decoupled output signals supplied to a baseband processing detection unit (6);

    - processing a matrix operation $\mathbf{H}^{H}_{F}$ for a frequency exchange processing such that each element of the matrix is defined as follows:

$$(h_{1,f1}(t))^* = (h_{1,f2}^*(t)) ;$$

$$(h_{2,f1}(t))^* = (h_{2,f2}^*(t))$$

$$(h_{1,f2}(t))^* = (h_{1,f1}^*(t)) ;$$

$$( h_{2,f2}(t))^* = (h_{2,f1}^*(t))$$

wherein * represents the complex conjugate and frequency exchange operation between the two said frequency subbands, $h_{1,f1}$ and $h_{1,f2}$ model the frequency selective multipath channels from the first transmit antenna to the receiver on different said frequency subbands f1 and f2 and $h_{2,f1}$ and $h_{2,f2}$ model the frequency selective multipath channels from the second transmit antenna to the receiver on different said frequency subbands f1 and f2;

- using said decoupled signals independently to estimate the originally transmitted first and second signal sequences.

6. The method for receiving data of claim 5 wherein the baseband processing detection unit (6) further provides a Rake detection method.

7. The method for receiving data of any one of claims 5 or 6 wherein a bandwidth of the MIMO UWB wireless communications system includes frequencies from about 3.1 GHz to about 10.6 GHz.

8. A method for processing signals in a Multiple Input - Multiple Output, MIMO, ultrawideband, UWB, wireless communication system having multiple different frequency sub-bands ($f_1$, $f_2$), comprising the steps of transmitting data and of receiving data according to anyone of claims 5-7.

**Patentansprüche**

1. Empfänger zum Empfangen von Daten in einem drahtlosen Ultrabreitband-Kommunikationssystem mit mehreren Eingängen und mit mehreren Ausgängen, MIMO-UWB-Kommunikationssystem, mit mehreren verschiedenen Frequenzteilbändern ($f_1$, $f_2$), wobei der Empfänger umfasst:

- zwei Empfangsantennen (R1, R2) zum Empfangen von Signalen;
- ein Empfangsmittel (4, 5) zum Anwenden einer Entkopplungs- und Kombinationsverarbeitung auf die empfangenen Signale zum Erzeugen zweier entkoppelter Ausgangsignale, die an eine Basisbandverarbeitungs-Erfassungseinheit (6) geliefert werden;
- wobei das genannte Empfangsmittel (4, 5) zum Anwenden einer Entkopplungs- und Kombinationsverarbeitung auf die empfangenen Signale ferner ein Mittel (4, 5) zum Verarbeiten einer Matrixoperation $H^H_F$ für eine Frequenzaustauschverarbeitung in der Weise umfasst, dass jedes Element der Matrix wie folgt definiert ist:

$$(h_{1,f1}(t))^* = (h_{1,f2}^*(t));$$

$$(h_{2,f1}(t))^* = (h_{2,f2}^*(t)),$$

$$(h_{1,f2}(t))^* = (h_{1,f1}^*(t));$$

$$(h_{2,f2}(t))^* = (h_{2,f1}^*(t)),$$

wobei * die Operation des komplexen Konjugierens und des Frequenzaustauschs zwischen den zwei genannten Frequenzteilbändern repräsentiert; wobei $h_{1,f1}$ und $h_{1,f2}$ die frequenzselektiven Multipfad-Kanäle von der ersten Sendeantenne zu dem Empfänger in verschiedenen der genannten Frequenzteilbänder f1 und f2 modellieren und $h_{2,f1}$ und $h_{2,f2}$ die frequenzselektiven Multipfad-Kanäle von der zweiten Sendeantenne zu dem Empfänger in verschiedenen der genannten Frequenzteilbänder $f_1$ und $f_2$ modellieren; und
- ein Mittel zum unabhängigen Verwenden der genannten entkoppelten Signale zum Schätzen einer ursprünglich gesendeten ersten und zweiten Signalfolge.

2. Empfänger gemäß Anspruch 1, bei dem die Basisbandverarbeitungs-Erfassungseinheit (6) einen Rake-Detektor umfasst.

3. Empfänger gemäß einem der Ansprüche 1 oder 2, bei dem eine Bandbreite des Empfängers Frequenzen von etwa 3,1 GHz bis etwa 10,6 GHz enthält.

4. Drahtloses Ultrabreitband-Kommunikationssystem mit mehreren Eingängen und mit mehreren Ausgängen, MIMO-UWB-Kommunikationssystem, mit mehreren verschiedenen Frequenzteilbändern ($f_1$, $f_2$), wobei das System einen Empfänger gemäß einem der Ansprüche 1-3 umfasst.

5. Verfahren zum Empfangen von Daten in einem drahtlosen Ultrabreitband-Kommunikationssystem mit mehreren Eingängen und mit mehreren Ausgängen, MIMO-UWB-Kommunikationssystem, mit mehreren verschiedenen Frequenzteilbändern ($f_1$, $f_2$), wobei das Verfahren Folgendes umfasst:

- Anwenden einer Entkopplungs- und Kombinationsverarbeitung auf die empfangenen Signale zum Erzeugen zweier entkoppelter Ausgangsignale, die an eine Basisbandverarbeitungs-Erfassungseinheit (6) geliefert werden;
- Verarbeiten einer Matrixoperation $H^H_F$ für eine Frequenzaustauschverarbeitung in der Weise, dass jedes Element der Matrix wie folgt definiert ist:

$$(h_{1,f1}(t))^* = (h_{1,f2}^*(t));$$

$$(h_{2,f1}(t))^* = (h_{2,f2}^*(t)),$$

$$(h_{1,f2}(t))^* = (h_{1,f1}^*(t));$$

$$(h_{2,f2}(t))^* = (h_{2,f1}^*(t)),$$

wobei * die Operation des komplexen Konjugierens und des Frequenzaustauschs zwischen den zwei genannten Frequenzteilbändern repräsentiert, $h_{1,f1}$ und $h_{1,f2}$ die frequenzselektiven Multipfad-Kanäle von der ersten Sendeantenne zu dem Empfänger in verschiedenen der genannten Frequenzteilbänder f1 und f2 modellieren und $h_{2,f1}$ und $h_{2,f2}$ die frequenzselektiven Multipfad-Kanäle von der zweiten Sendeantenne zu dem Empfänger in verschiedenen der genannten Frequenzteilbänder f1 und f2 modellieren; und
- unabhängiges Verwenden der genannten entkoppelten Signale zum Schätzen der ursprünglich gesendeten ersten und zweiten Signalfolge.

**6.** Verfahren zum Empfangen von Daten gemäß Anspruch 5, bei dem die Basisbandverarbeitungs-Erfassungseinheit (6) ferner ein Rake-Erfassungsverfahren bereitstellt.

**7.** Verfahren zum Empfangen von Daten gemäß einem der Ansprüche 5 oder 6, bei dem eine Bandbreite des drahtlosen MIMO-UWB-Kommunikationssystems Frequenzen von etwa 3,1 GHz bis etwa 10,6 GHz enthält.

**8.** Verfahren zum Verarbeiten von Signalen in einem drahtlosen Ultrabreitband-Kommunikationssystem mit mehreren Eingängen und mit mehreren Ausgängen, MIMO-UWB-Kommunikationssystem, mit mehreren verschiedenen Frequenzteilbändern ($f_1$, $f_2$), wobei das Verfahren die Schritte des Sendens von Daten und des Empfangens von Daten gemäß einem der Ansprüche 5-7 umfasst.

## Revendications

**1.** Récepteur permettant de recevoir des données dans un système de communication sans fil à bande ultralarge, UWB, entrée multiple - sortie multiple, MIMO, ayant de multiples sous-bandes de fréquences différentes ($f_1$, $f_2$), le récepteur comprenant

- deux antennes de réception (R1, R2), permettant de recevoir des signaux ;
- des moyens de réception (4, 5) permettant d'appliquer un traitement de découplage et de combinaison à des signaux reçus afin de former deux signaux de sortie découplés fournis à une unité de détection de traitement de bande de base (6) ;
- lesdits moyens de réception (4, 5) permettant d'appliquer un traitement de découplage et de combinaison aux signaux reçus comprenant en outre des moyens (4, 5) permettant de traiter une opération de matrice $H^H_F$ pour un traitement d'échange de fréquence de sorte que chaque élément de la matrice est défini comme suit :

$$(h_{1,f1}(t))^* = (h_{1,f2}^*(t)) \;;$$

$$(h_{2,f1}(t))^* = (h_{2,f2}^*(t))$$

$$(h_{1,f2}(t))^* = (h_{1,f1}^*(t)) \;;$$

$$(h_{2,f2}(t))^* = (h_{2,f1}^*(t))$$

dans lesquels * représente l'opération de nombre complexe conjugué et d'échange de fréquence entre lesdites deux sous-bandes de fréquence ; dans lesquels $h_{1,f1}$ et $h_{1,f2}$ modélisent les canaux à trajets multiples sélectifs de fréquence de la première antenne de transmission au récepteur sur lesdites sous-bandes de fréquences différentes f1 et f2 et $h_{2,f1}$ et $h_{2,f2}$ modélisent les canaux à trajets multiples sélectifs de fréquence de la seconde antenne de transmission au récepteur sur lesdites sous-bandes de fréquence différente $f_1$ et $f_2$ ; et
- des moyens permettant d'utiliser lesdits signaux découplés indépendamment afin d'estimer des première et seconde séquences de signaux transmises à l'origine.

**2.** Récepteur selon la revendication 1, dans lequel l'unité de détection de traitement de bande de base (6) comprend un détecteur Rake.

**3.** Récepteur selon l'une quelconque des revendications 1 ou 2, dans lequel une bande passante du récepteur comprend des fréquences d'environ 3,1 GHz à environ 10,6 GHz.

**4.** Système de communication sans fil à bande ultralarge, UWB, entrée multiple - sortie multiple, MIMO, ayant de multiples sous-bandes de fréquences différentes ($f_1$, $f_2$), le système comprenant un récepteur selon l'une quelconque des revendications 1 à 3.

5. Procédé de réception de données dans un système de communication sans fil à bande ultralarge, UWB, entrée multiple - sortie multiple, MIMO, ayant de multiples sous-bandes de fréquences différentes ($f_1$, $f_2$), le système comprenant :

   - l'application d'un traitement de découplage et de combinaison à des signaux reçus afin de former deux signaux de sortie découplés fournis à l'unité de détection de traitement de bande de base (6) ;
   - le traitement d'une opération de matrice $H^H_F$ pour un traitement d'échange de fréquence de sorte que chaque élément de la matrice est défini comme suit :

$$(h_{1,f1}(t))^* = (h_{1,f2}^*(t)) \ ;$$

$$(h_{2,f1}(t))^* = (h_{2,f2}^*(t))$$

$$(h_{1,f2}(t))^* = (h_{1,f1}^*(t)) \ ;$$

$$(h_{2,f2}(t))^* = (h_{2,f1}^*(t))$$

   dans lesquels * représente l'opération de nombre complexe conjugué et d'échange de fréquence entre lesdites deux sous-bandes de fréquence, $h_{1,f1}$ et $h_{1,f2}$ modélisent les canaux à trajets multiples sélectifs de fréquence de la première antenne de transmission au récepteur sur lesdites sous-bandes de fréquences différentes f1 et f2 et $h_{2,f1}$ et $h_{2,f2}$ modélisent les canaux à trajets multiples sélectifs de fréquence de la seconde antenne de transmission au récepteur sur lesdites sous-bandes de fréquence différente f1 et f2 ;
   - l'utilisation desdits signaux découplés indépendamment afin d'estimer les première et seconde séquences de signaux transmises à l'origine.

6. Procédé de réception de données selon la revendication 5, dans lequel l'unité de détection de traitement de bande de base (6) comprend en outre un procédé de détection Rake.

7. Procédé de réception de données selon l'une quelconque des revendications 5 ou 6, dans lequel une bande passante du système de communication sans fil UWB MIMO comprend des fréquences d'environ 3,1 GHz à environ 10,6 GHz.

8. Procédé de traitement de signaux dans un système de communication sans fil à bande ultralarge, UWB, entrée multiple - sortie multiple, MIMO, ayant de multiples sous-bandes de fréquences différentes ($f_1$, $f_2$), comprenant les étapes de transmission de données et de réception de données selon l'une quelconque des revendications 5 à 7.

Fig. 1

Fig. 2

Fig. 3

$$H_F^H = \begin{bmatrix} h_{1,f_2}^{\;\bullet}(t) & h_{2,f_1}(t) \\ h_{2,f_2}^{\;\bullet}(t) & -h_{1,f_1}(t) \end{bmatrix}$$

$h_{1,f_1}(t)$  $h_{1,f_2}(t)$  $h_{2,f_1}(t)$  $h_{2,f_2}(t)$

**R1**

**R2**

4

5

Fig. 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2004081073 A1

**Non-patent literature cited in the description**

- **S.M. ALAMOUTI.** A simple transmitter diversity scheme for wireless communications. *IEEE J.Select.Areas Commun.,* October 1998, vol. 16 (8), 1451-1458
- **V.TAROKH et al.** Space-time block coding for wireless communications: performance results. *IEEE J.Select.Areas Commun.,* March 1999, vol. 17 (3), 451-460
- **E.1LINDSKOG et al.** A transmit diversity scheme for channels with intersymbol interference. *Proc. IEEE, Int. Conf. Communications 2000,* June 2000, 307-311
- **L. YANG et al.** Analog space-time coding for multi-antenna ultra-wideband transmissions. *IEEE Trans.Comm.,* March 2004, vol. 52 (3), 507-517
- **W.P.SIRIWONGPAIRAT et al.** Performance analysis of time hopping and direct sequence UWB spare-timing systems. *IEEE GLOBECOM 2004,* December 2004, vol. 6, 3526-3530